# EUROPÄISCHE PATENTANMELDUNG

(11) **EP 4 667 547 A1**
(43) Veröffentlichungstag der Anmeldung: **24.12.2025**
(21) Anmeldenummer: 25182365.4
(22) Anmeldetag: 12.06.2025
(51) Int. Cl.: C09J 7/00

(54) **DOPPELSEITIGES ADHÄSIVES BAND**

(30) Priorität: 17.06.2024 DE 102024205553
(71) Anmelder: Gottlieb Binder GmbH & Co. KG, 71088 Holzgerlingen (DE)
(72) Erfinder: HEEPE, Lars, 72072 Tübingen (DE); DROTLEF, Dirk-Michael, 75233 Tiefenbronn (DE)
(74) Vertreter: Kohler Schmid Möbus Patentanwälte

(57) **Zusammenfassung**

Die Erfindung betrifft ein adhäsives Band (10) mit einem Träger (12) und ersten sowie zweiten Vorsprüngen (18, 20), die jeweils mit einem Ende mit dem Träger (12) unmittelbar verbunden sind. Dabei befinden sich die Vorsprünge (18, 20) auf einander gegenüberliegenden Trägerflächen (14, 16) auf der Oberfläche des Trägers (12). Eine erste Flächendichte, mit der die ersten Vorsprünge (18) auf der ersten Trägerfläche (14) verteilt sind, ist verschieden von einer zweiten Flächendichte, mit der die zweiten Vorsprünge (20) auf der zweiten Trägerfläche (16) verteilt sind. Zwischen Schichten (22, 24) des Trägers (12) kann eine weitere Schicht (40) vorgesehen sein, um die Schichten (22, 24) bei weiterhin hoher Stabilität dünner gestalten zu können.

## Beschreibung

### Hintergrund der Erfindung

Die Erfindung betrifft ein adhäsives Band, aufweisend einen Träger, dessen Oberfläche mit einer ersten Trägerfläche und einer zweiten Trägerfläche ausgebildet ist, wobei die Trägerflächen einander gegenüberliegen.

Aus der DE 10 2017 131 345 A1 ist ein Objekt mit zwei Flächen bekannt, wobei die eine Fläche einen anderen Haftparameter aufweist als die andere Fläche. Durch die unterschiedlichen Hafteigenschaften der Flächen soll das Objekt unterschiedlich stark an Gegenstände angeheftet und von den Gegenständen wieder gelöst werden können. Die Adhäsionskräfte zum Anhaften des Objekts an Gegenständen werden durch Vorsprünge auf den Flächen bewirkt, wobei die Vorsprünge der einen Fläche sich von den Vorsprüngen der anderen Fläche in Bezug auf die Höhe, Durchmesser und/oder das Elastizitätsmodul unterscheiden.

Um diese Unterschiede der Vorsprünge zu bewirken, müssen die Vorsprünge unter unterschiedlichen Prozessbedingungen hergestellt werden.

### Aufgabe der Erfindung

Es ist demgegenüber Aufgabe der Erfindung, ein doppelseitiges adhäsives Band bereitzustellen, bei dem mit einer vergleichsweise einfachen Herstellung der Vorsprünge Adhäsionskräfte erzielt werden können, die auf beiden Seiten des adhäsiven Bandes verschieden sind.

### Beschreibung der Erfindung

Diese Aufgabe wird erfindungsgemäß durch ein adhäsives Band gemäß Anspruch 1 gelöst.

Bei dem erfindungsgemäßen adhäsiven Band stehen von der ersten Trägerfläche erste Vorsprünge und von der zweiten Trägerfläche zweite Vorsprünge hervor, wobei die ersten Vorsprünge auf der ersten Trägerfläche mit einer ersten Flächendichte und die zweiten Vorsprünge auf der zweiten Trägerfläche mit einer zweiten Flächendichte angeordnet sind, wobei die erste Flächendichte und die zweite Flächendichte voneinander verschieden sind. Dabei bewirken die unterschiedlichen Flächendichten, dass die Adhäsionskraft, mit der die erste Trägerfläche auf eine Gegenfläche (an der das adhäsive Band befestigt werden soll) wirkt, von der Adhäsionskraft, mit der die zweite Trägerfläche auf die Gegenfläche wirkt, verschieden ist.

Die Vorsprünge stehen insbesondere senkrecht aus der jeweiligen Trägerfläche hervor. Unter der Flächendichte der Vorsprünge wird dabei insbesondere die Anzahl der Vorsprünge auf einer Teilfläche der jeweiligen Trägerfläche geteilt durch den Flächeninhalt dieser Teilfläche verstanden.

Gemäß einer vorteilhaften Ausgestaltung des adhäsiven Bands weist der Träger eine erste Schicht und eine zweite Schicht auf, wobei die erste Schicht die erste Trägerfläche aufweist und die zweite Schicht die zweite Trägerfläche aufweist, wobei die Schichten in Richtung der Abfolge der Trägerflächen übereinander angeordnet sind. Die Schichten mit den Trägerflächen und den zugehörigen Vorsprüngen können zunächst getrennt hergestellt und anschließend zusammengeführt werden, um das adhäsive Band auszubilden. Dadurch wird vorteilhaft der Herstellungsprozess des adhäsiven Bands vereinfacht.

Die beiden Schichten können einstückig miteinander ausgebildet sein. Weiter bevorzugt werden die beiden Seiten dabei nacheinander strukturiert. Mit anderen Worten können zuerst die ersten Vorsprünge ausgebildet und anschließend die zweiten Vorsprünge ausgebildet werden.

Bei einer Weiterentwicklung der Ausgestaltung des adhäsiven Bands mit zwei Schichten weist die erste Schicht und/oder die zweite Schicht eine Dicke von 300 µm bis 400 µm auf. Dadurch sind die Schichten bei typischen Herstellungsmaterialien stabil, aber in ihrer Form leicht anpassbar ausgebildet.

Einige Vorsprünge können vorteilhaft gleich oder ähnlich zu den zweiten Vorsprüngen ausgestaltet werden, wodurch das Produktionsverfahren des adhäsiven Bands vereinfacht wird.

Bei einer bevorzugten Ausführungsform des adhäsiven Bands sind eine überwiegende Anzahl der ersten Vorsprünge gleich zu einer überwiegenden Anzahl der zweiten Vorsprünge ausgebildet, wobei insbesondere die ersten Vorsprünge und die zweiten Vorsprünge alle gleich ausgebildet sind. Die Vorsprünge weisen auf beiden Seiten des adhäsiven Bands die gleichen Merkmale auf, wodurch der Aufwand der Herstellung des adhäsiven Bands reduziert wird.

Vorteilhaft ist eine Ausführungsform des adhäsiven Bands, bei der der Träger eine Dicke von 600 µm bis 5000 µm aufweist. Bei dieser Dicke ist der Träger bei typischen Herstellungsmaterialien stabil, aber in seiner Form leicht anpassbar ausgebildet. Die Dicke des Trägers beträgt bevorzugt 800 µm bis 1000 µm.

Bevorzugt ist eine Ausführungsform des adhäsiven Bands, bei der der Träger eine weitere Schicht aufweist, die insbesondere als Folie ausgebildet ist. Die weitere Schicht verleiht dem adhäsiven Band zusätzliche Stabilität. Insbesondere können die erste und die zweite Schicht unter Erhaltung ihrer Funktionalität mit einer vergleichsweise geringen Dicke ausgebildet sein. Die weitere Schicht ist insbesondere flexibel ausgestaltet. Die weitere Schicht weist insbesondere eine Schichtdicke von 60 µm oder weniger, besonders bevorzugt von 40 µm oder weniger auf. Bevorzugt beträgt die Dicke der weiteren Schicht 5 µm oder mehr, besonders bevorzugt 10 µm oder mehr.

Bei einer Weiterbildung der vorgenannten Ausführungsform weist die weitere Schicht ein Textil, ein Vlies, ein Netz, Polyurethan (PUR), Polyethylenterephtalat (PET) und/oder Schaum, insbesondere Acrylatschaum, als Material auf. Bei derartigen Materialien ist die weitere Schicht flexibel und stabil ausgebildet.

Von Vorteil ist eine Ausführungsform des adhäsiven Bands, bei der die ersten Vorsprünge und/oder die zweiten Vorsprünge eine Höhe von 40 µm bis 70 µm, insbesondere eine Höhe von 50 µm bis 60 µm aufweisen. Dadurch können sich die Vorsprünge an Unebenheiten der Gegenfläche anpassen, wobei sie bei typischen Herstellungsmaterialien und typischen Durchmessern elastisch bleiben.

Bei einer bevorzugten Ausführungsform des adhäsiven Bands sind die ersten Vorsprünge mit einer Flächendichte von 25.000 Vorsprüngen bis 50.000 Vorsprüngen pro cm² auf der ersten Trägerfläche und/oder die zweiten Vorsprünge mit einer Flächendichte von 15.000 Vorsprüngen bis 20.000 Vorsprüngen pro cm² auf der zweiten Trägerfläche angeordnet. Derartige Flächendichten bewirken eine starke Adhäsionskraft der Trägerfläche auf eine typische Gegenfläche. Gleichzeitig sind die Flächendichten derart verschieden, dass sich die Adhäsionskräfte, die durch die Trägerflächen bewirkt werden, deutlich unterscheiden.

Bei vorteilhaften Ausführungsformen des adhäsiven Bands weisen die ersten Vorsprünge und/oder die zweiten Vorsprünge als Material ein Elastomer auf, wobei die ersten und/oder die zweiten Vorsprünge insbesondere aus Elastomer ausgebildet sind. Dadurch weisen die Vorsprünge eine hohe Elastizität auf. Das Elastomer liegt vorzugsweise als Polyurethan, als thermoplastisches Elastomer oder als Polysiloxan, insbesondere als Polyvinylsiloxan, vor. Im Falle eines Polysiloxans kann dieses, insbesondere durch Wärme, UV-Licht und/oder einen Pt-Katalysator, vernetzt sein.

Weiterhin bevorzugt ist eine Ausführungsform des adhäsiven Bands, bei der die ersten Vorsprünge und/oder die zweiten Vorsprünge eine maximale Breite von 30 µm - 100 µm aufweisen. Eine derartige vergleichsweise dünne Ausgestaltung der Vorsprünge erhöht ihre Elastizität zur Anpassung an die Form einer typischen (unebenen) Gegenfläche.

Vorteilhaft ist eine Ausführungsform des adhäsiven Bands, bei der jeder Vorsprung einen Schaft aufweist, der aus der zugehörigen Trägerfläche herausragt, wobei an den distalen Enden der Schäfte Kopfabschnitte ausgebildet sind, die eine größere Breite aufweisen als die Breite der Schäfte. Dadurch sind die Vorsprünge leicht verformbar ausgebildet, weisen aber an dem jeweiligen Kopfabschnitt eine große Haftfläche auf. Die distalen Enden sind insbesondere die Enden der Schäfte, die von der Trägerfläche abgewandt sind.

Bevorzugt ist der jeweilige Vorsprung rotationssymmetrisch ausgebildet. Insbesondere soll unter Rotationssymmetrie eines Körpers im Rahmen der Anmeldung verstanden werden, dass der Körper, insbesondere der Vorsprung, bei einer Drehung um eine Symmetrieachse des Körpers um einen Winkel von mehr als 0° und weniger als 360° auf sich selbst abgebildet wird. Vorzugweise weist der Vorsprung wenigstens einen Abschnitt auf, der in Form einer rotationssymmetrischen Hälfte eines Hyperboloids ausgebildet ist. Bevorzugt ist der Vorsprung in Form eines Hyperboloids ausgebildet. Bei bevorzugten Ausführungsformen weist der Vorsprung einen Abschnitt in der Form einer rotationssymmetrischen ersten Hälfte eines Hyperboloids auf, die sich in Richtung von der Mitte des Vorsprungs zu dem Ende des Vorsprungs an der Trägerfläche weitet und einen Abschnitt in der Form einer rotationssymmetrischen zweiten Hälfte eines Hyperboloids, die sich in Richtung von der Mitte des Vorsprungs zu dem Kopfabschnitt weitet. Vorzugsweise weist die zweite Hyperboloidhälfte Krümmungen, insbesondere lokale Krümmungen, auf, die größer sind als die Krümmungen, insbesondere die lokalen Krümmungen, der ersten Hyperboloidhälfte.

Insbesondere weist das Ende des jeweiligen Vorsprungs an der Trägerfläche eine größere Breite auf als der Kopfabschnitt des Vorsprungs. Vorzugsweise weist der Vorsprung in einem Abschnitt, der sich von der Mitte des Vorsprungs zu dem Kopfabschnitt erstreckt, die geringste Breite auf. Insbesondere wird die Breite senkrecht zu einer Längsachse des Vorsprungs gemessen.

Bevorzugt weist der Kopfabschnitt in der Draufsicht auf den jeweiligen Vorsprung die Form eines Kreises oder eines regelmäßigen Polygons, insbesondere eines regelmäßigen Sechsecks, auf. Vorzugweise weist der Kopfabschnitt eine Stirnfläche und eine Mantelfläche auf, die an die Stirnfläche angrenzt. Insbesondere ist zwischen der Stirnfläche und der Mantelfläche entlang einer gemeinsamen Randkurve dieser beiden Flächen, insbesondere lokal, ein Winkel von mehr als 0° und weniger als 180° ausgebildet. Bevorzugt weist die Stirnfläche eine andere, insbesondere lokale, Krümmung auf als die Mantelfläche des Kopfabschnitts. Insbesondere wird unter einer Mantelfläche eine Seitenfläche des Vorsprungs mit einem Normalenvektor verstanden, der senkrecht auf einer Längsachse durch den Vorsprung steht.

Bevorzugt ist eine Ausführungsform des adhäsiven Bands, bei der die ersten Vorsprünge und/oder die zweiten Vorsprünge einstückig mit dem Träger ausgebildet sind. Dies vereinfacht den Herstellungsprozess des adhäsiven Bands. Darüber hinaus sind die Vorsprünge stabil (materialschlüssig) an den Trägerflächen befestigt.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt schematisch einen Längsschnitt durch eine erste Ausführungsform eines adhäsiven Bands;
- Fig. 2: zeigt schematisch einen vergrößerten Ausschnitt aus dem Längsschnitt durch das adhäsive Band;
- Fig. 3: zeigt schematisch einen Längsschnitt durch eine zweite Ausführungsform eines adhäsiven Bands.

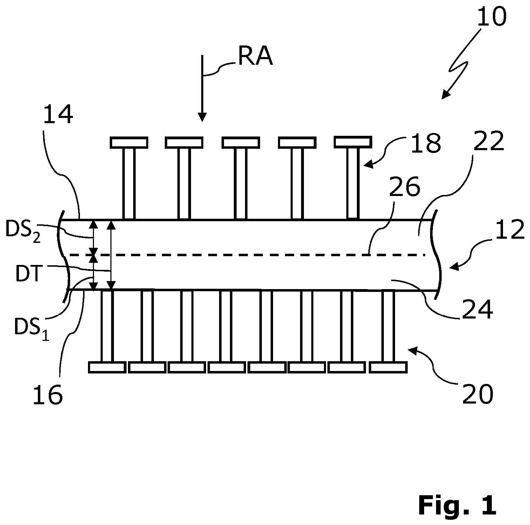

**Fig. 1** zeigt schematisch einen Längsschnitt durch eine erste Ausführungsform eines erfindungsgemäßen adhäsiven Bands **10.** Ein Träger **12** des adhäsiven Bands 10 weist eine erste Trägerfläche **14** und eine zweite Trägerfläche **16** auf, wobei die zweite Trägerfläche 16 gegenüber der ersten Trägerfläche 14 an dem Träger 12 ausgebildet ist. Von der ersten Trägerfläche 14 stehen erste Vorsprünge **18** senkrecht ab. Von der zweiten Trägerfläche 16 stehen zweite Vorsprünge **20** senkrecht ab. Dabei ist eine erste Flächendichte, mit der die ersten Vorsprünge 18 auf der ersten Trägerfläche 14 angeordnet sind, kleiner als eine zweite Flächendichte, mit der die zweiten Vorsprünge 20 auf der zweiten Trägerfläche 16 angeordnet sind.

Der Träger 12 ist in eine erste Schicht **22** und eine zweite Schicht **24** mit einer jeweiligen Dicke **DS₁, DS₂** unterteilt, wobei eine Trennfläche **26** zwischen den Schichten 22, 24 gestrichelt angedeutet ist, um zu verdeutlichen, dass die Schichten 24, 26 auch in Form einer einzigen Schicht vorliegen könnten. Die erste Trägerfläche 14 gehört zu der ersten Schicht 22 und die zweite Trägerfläche 16 zu der zweiten Schicht 24. Die zweite Schicht 24 ist auf der ersten Schicht 22 in einer Richtung **RA** der Abfolge der Trägerflächen 14, 16 angeordnet. Die Dicke **DT** des Trägers 12 ergibt sich als Summe der Dicken der Schichten DS₁, DS₂.

Alternativ zu dem Schichtaufbau kann der Träger 12 erfindungsgemäß einstückig ausgebildet sein.

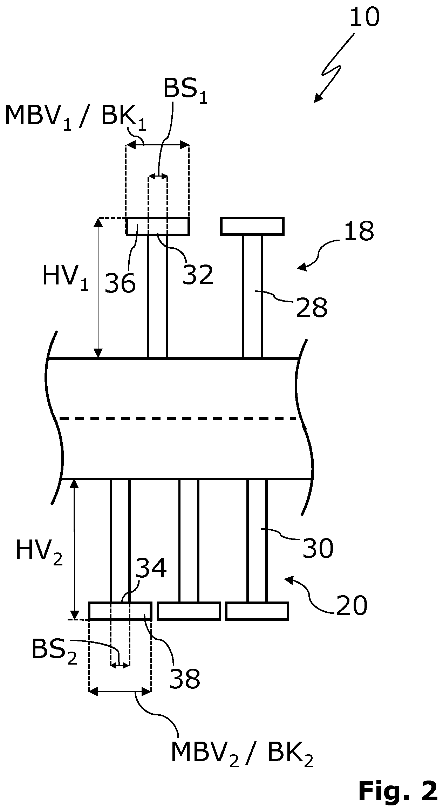

**Fig. 2** zeigt schematisch einen vergrößerten Ausschnitt durch den Längsschnitt durch das adhäsive Band 10 gemäß Fig. 1. Die ersten Vorsprünge 18 und die zweiten Vorsprünge 20 sind jeweils in Form eines zylinderförmigen oder hyperboloidförmigen Schaftes **28, 30** ausgeformt, wobei an den distalen (von der Trägerfläche 14, 16 beabstandeten) Enden **32, 34** der Schäfte jeweils ein Kopfabschnitt **36, 38** der Vorsprünge 18, 20 ausgebildet ist. Die Vorsprünge 18, 20 weisen eine Höhe **HV₁, HV₂** auf. Die Schäfte 28, 30 haben eine Breite (hier in Form eines Durchmessers) **BS₁, BS₂,** wobei die Breite BS₁, BS₂ der Schäfte 28, 30 kleiner ist als eine Breite (hier der Durchmesser) **BK₁, BK₂** der Kopfabschnitte 36, 38. In der gezeigten Ausführungsform ist die Breite BK₁, BK₂ der Kopfabschnitte 36, 38 gleichzeitig die maximale Breite **MBV₁, MBV₂** des jeweiligen Vorsprungs 18, 20. Die Vorsprünge 18, 20 weisen insbesondere identische Merkmale auf.

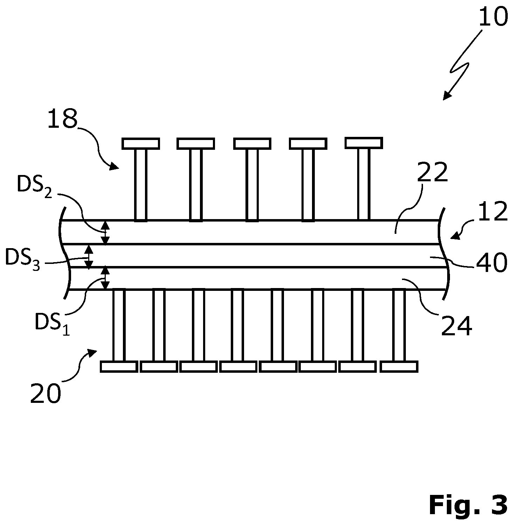

**Fig. 3** zeigt eine zweite Ausführungsform des adhäsiven Bands 10 mit der ersten Schicht 22 und der zweiten Schicht 24 sowie den ersten Vorsprüngen 18 und zweiten Vorsprüngen 20. Im Unterschied zu der ersten Ausführungsform weist das adhäsive Band in der in Fig. 3 gezeigten Ausführungsform eine weitere Schicht **40** auf, die zwischen der ersten Schicht 22 und der zweiten Schicht 24 angeordnet ist. Die weitere Schicht 40 ist insbesondere flexibel ausgebildet, bevorzugt als Folie. Vorzugsweise weist die weitere Schicht 40 ein Material aus einem Textil, einem Vlies, einem Netz, Polyurethan (PUR), Polyethylenterephtalat (PET) und/oder Schaum, insbesondere Acrylatschaum, auf. Die weitere Schicht 40 erhöht die Stabilität des adhäsiven Bands 10. Insbesondere können unter Erhaltung ihrer Funktionalität die erste Schicht 22 mit einer geringeren Schichtdicke DS2₁ und die zweite Schicht 24 mit einer geringeren Schichtdicke DS2₂ ausgebildet werden als bei der ersten Ausführungsform. Die Dicke DS2₃ der weiteren Schicht beträgt insbesondere 60 µm oder weniger, bevorzugt 40 µm oder weniger. Bevorzugt beträgt die Dicke DS2₃ der weiteren Schicht 5 µm oder mehr, besonders bevorzugt 10 µm oder mehr.

Unter Vornahme einer Zusammenschau aller Figuren der Zeichnung betrifft die Erfindung zusammenfassend ein adhäsives Band 10 mit einem Träger 12 und ersten sowie zweiten Vorsprüngen 18, 20, die jeweils an einem Ende mit dem Träger 12 unmittelbar verbunden sind. Dabei befinden sich die Vorsprünge 18, 20 auf einander gegenüberliegenden Trägerflächen 14, 16 auf der Oberfläche des Trägers 12. Eine erste Flächendichte, mit der die ersten Vorsprünge 18 auf der ersten Trägerfläche 14 verteilt sind, ist verschieden von einer zweiten Flächendichte, mit der die zweiten Vorsprünge 20 auf der zweiten Trägerfläche 16 verteilt sind. Zwischen Schichten 22, 24 des Trägers 12 kann eine weitere Schicht 40 vorgesehen sein, um die Schichten 22, 24 bei weiterhin hoher Stabilität dünner gestalten zu können.

### Bezugszeichenliste

- 10: adhäsives Band
- 12: Träger
- 14: erste Trägerfläche
- 16: zweite Trägerfläche
- 18: erste Vorsprünge
- 20: zweite Vorsprünge
- 22: erste Schicht
- 24: zweite Schicht
- 26: Trennfläche
- 28: zylinderförmige oder hyperboloidförmigen Schäfte der ersten Vorsprünge
- 30: zylinderförmige oder hyperboloidförmigen Schäfte der zweiten Vorsprünge
- 32: distale Enden an den ersten Vorsprüngen
- 34: distale Enden an den zweiten Vorsprüngen
- 36: Kopfabschnitte der ersten Vorsprünge
- 38: Kopfabschnitte der zweiten Vorsprünge
- 40: weitere Schicht
- DS₁: Dicke der ersten Schicht
- DS₂: Dicke der zweiten Schicht
- DT: Dicke des Trägers
- RA: Richtung der Abfolge der Trägerflächen
- HV₁: Höhe der ersten Vorsprünge
- HV₂: Höhe der zweiten Vorsprünge
- BS₁: Breite der Schäfte der ersten Vorsprünge
- BS₂: Breite der Schäfte der zweiten Vorsprünge
- BK₁: Breite der Kopfabschnitte der ersten Vorsprünge
- BK₂: Breite der Kopfabschnitte der zweiten Vorsprünge
- MBV₁: Maximale Breite der ersten Vorsprünge
- MBV₂: Maximale Breite der zweiten Vorsprünge

## Patentansprüche

1. Adhäsives Band (10), aufweisend einen Träger (12), dessen Oberfläche mit einer ersten Trägerfläche (14) und einer zweiten Trägerfläche (16) ausgebildet ist, wobei die Trägerflächen (14, 16) einander gegenüberliegen, wobei von der ersten Trägerfläche (14) erste Vorsprünge (18) und von der zweiten Trägerfläche (16) zweite Vorsprünge (20) hervorstehen,
wobei die ersten Vorsprünge (18) auf der ersten Trägerfläche (14) mit einer ersten Flächendichte und die zweiten Vorsprünge (20) auf der zweiten Trägerfläche (16) mit einer zweiten Flächendichte angeordnet sind,
wobei die erste Flächendichte und die zweite Flächendichte voneinander verschieden sind.

2. Adhäsives Band nach Anspruch 1, wobei der Träger (12) eine erste Schicht (22) und eine zweite Schicht (24) aufweist, wobei die erste Schicht (22) die erste Trägerfläche (14) aufweist und die zweite Schicht (24) die zweite Trägerfläche (16) aufweist, wobei die Schichten (22, 24) in Richtung (RA) der Abfolge der Trägerflächen (14, 16) übereinander angeordnet sind.

3. Adhäsives Band nach Anspruch 2, wobei die erste Schicht (22) und/oder die zweite Schicht (24) eine Dicke (DS₁, DS₂) von 300 µm bis 400 µm aufweist.

4. Adhäsives Band nach einem der vorhergehenden Ansprüche, wobei eine überwiegende Anzahl der ersten Vorsprünge (18) gleich zu einer überwiegenden Anzahl der zweiten Vorsprünge (20) ausgebildet sind, wobei insbesondere die ersten Vorsprünge (18) und die zweiten Vorsprünge (20) alle gleich ausgebildet sind.

5. Adhäsives Band nach einem der vorhergehenden Ansprüche, wobei der Träger (12) eine Dicke (DT) von 600 µm bis 5000 µm aufweist.

6. Adhäsives Band nach einem der vorhergehenden Ansprüche, wobei der Träger (12) eine weitere Schicht (40) aufweist, die insbesondere als Folie ausgebildet ist.

7. Adhäsives Band nach Anspruch 6, wobei die weitere Schicht (40) ein Textil, ein Vlies, ein Netz, Polyurethan (PUR), Polyethylenterephtalat (PET) und/oder Schaum, insbesondere Acrylatschaum als Material aufweist.

8. Adhäsives Band nach einem der vorhergehenden Ansprüche, wobei die ersten Vorsprünge (18) und/oder die zweiten Vorsprünge (20) eine Höhe (HV₁, HV₂) von 40 µm bis 70 µm, insbesondere eine Höhe (HV₁, HV₂) von 50 µm bis 60 µm aufweisen.

9. Adhäsives Band nach einem der vorhergehenden Ansprüche, wobei die ersten Vorsprünge (18) mit einer Flächendichte von 25.000 Vorsprüngen bis 50.000 Vorsprüngen pro cm² auf der ersten Trägerfläche (14) und/oder die zweiten Vorsprünge (20) mit einer Flächendichte von 15.000 Vorsprüngen bis 20.000 Vorsprüngen pro cm² auf der zweiten Trägerfläche (16) angeordnet sind.

10. Adhäsives Band nach einem der vorhergehenden Ansprüche, wobei die ersten Vorsprünge (18) und/oder die zweiten Vorsprünge (20) als Material ein Elastomer aufweisen, insbesondere aus Elastomer ausgebildet sind.

11. Adhäsives Band nach einem der vorhergehenden Ansprüche, wobei die ersten Vorsprünge (18) und/oder die zweiten Vorsprünge (20) eine maximale Breite (MBV₁, MBV₂) von 30 µm - 100 µm aufweisen.

12. Adhäsives Band nach einem der vorhergehenden Ansprüche, wobei jeder Vorsprung (18, 20) einen Schaft (28, 30) aufweist, der aus der zugehörigen Trägerfläche (14, 16) herausragt, wobei an den distalen Enden (32, 34) der Schäfte (28, 30) Kopfabschnitte (36, 38) ausgebildet sind, die eine größere Breite (BK₁, BK₂) aufweisen als die Breite (BS₁, BS₂) der Schäfte (28, 30).

13. Adhäsives Band nach einem der vorhergehenden Ansprüche, wobei die ersten Vorsprünge (18) und/oder die zweiten Vorsprünge (20) einstückig mit dem Träger (12) ausgebildet sind.
